# EUROPÄISCHE PATENTSCHRIFT

(11) **EP 0 747 563 B1**
(45) Veröffentlichungstag und Bekanntmachung des Hinweises auf die Patenterteilung: **10.03.1999**
(21) Anmeldenummer: 96107460.6
(22) Anmeldetag: 19.05.1996
(51) Int. Cl.: E06B 9/266, E06B 9/36, B29C 53/36, B29C 65/50

(54) **Arbeitsverfahren zur Herstellung von Taschen an den Enden von Lamellen einer Lamellenbahn aus flexiblem Werkstoff und Vorrichtung zur Durchführung diese Arbeitsverfahrens**
Method of making bags at the end of lamellae made out of flexible material and apparatus for this method
Procédé de fabrication de poches aux extrémités de lamelles faites en matériau flexible et appareil mettant en oeuvre ce procédé

(30) Priorität: 10.06.1995 DE 19521283
(43) Veröffentlichungstag der Anmeldung: 11.12.1996
(73) Patentinhaber: BENTHIN AKTIENGESELLSCHAFT, D-27572 Bremerhaven (DE)
(72) Erfinder: Benthin, Siegfried, 27574 Bremerhaven (DE)
(74) Vertreter: von Ahsen, Erwin-Detlef

(56) Entgegenhaltungen:
- DE-C- 4 308 405
- FR-A- 2 182 245

## Beschreibung

Die Erfindung bezieht sich auf ein Arbeitsverfahren zur Herstellung von Taschen an den Enden von Lamellen einer Lamellenbahn aus einem flexiblen Werkstoff, insbesondere Lamellen einer Vertikaljalousie, nach dem Oberbegriff des Patentanspruches 1. Die Erfindung bezieht sich weiter auf die Ausbildung einer Vorrichtung, die unter anderem zur Durchführung dieses Arbeitsverfahrens geeignet ist.

Bei einem aus der DE-A-43 08 405 bekannten Arbeitsverfahren zur Herstellung von Einlegetaschen für Beschwerungen an den unteren Enden und für den Lamellenhalter an den oberen Enden der Lamellen einer Vertikaljalousie wird das als Bahn von einer Vorratsrolle ablaufende Schweißhilfsmittel, zum Beispiel eine Kunststoffolie oder ein Kunststoffgewebe, aus einer Bereitschaftsstellung oberhalb der in eine Taschenaufnahme eingelegten Lamellentasche einem Druckstreifen zugeführt, von diesem untergriffen und mit einer Schwenkbewegung von etwa 90° zusammen mit dem Druckstreifen in die teilweise geöffnete Lamellentasche eingeschwenkt, so daß der Druckstreifen anschließend in seine Ausgangslage zurückkehrt, bevor der eigentliche Schweißvorgang durch zwei beheizbare und gegeneinander bewegliche Schweißbacken beginnen und anschließend eine Abtrennung des verschweißten Endes des Schweißhilfsmittels von der Bahn auf der Vorratsrolle erfolgen kann.

Für die Durchführung dieses bekannten Arbeitsverfahrens wird durch die gleiche Druckschrift eine Vorrichtung offenbart, bei der das freie Ende des Schweißhilfsmittels in der Bereitschaftsstellung zu der von Heizbacken gebildeten Schweißstation höhenversetzt angeordnet und ein Druckstreifen vorgesehen ist, der unter das frei vorragende Ende des Schweißhilfsmittels schwenken kann und zusammen mit dem Ende des Schweißhilfsmittels vertikal beweglich an einem Gehäuse geführt ist. Für die Ausführung der Schwenkbewegung des Druckstreifens ist dieser an einer um eine horizontale Querachse schwenkbaren Wippe angeordnet, so daß der Druckstreifen das freie Ende des Schweißhilfsmittels bei einer Betätigung der Wippe in die teilweise offene Lamellentasche einschwenkt.

Der Erfindung liegt die Aufgabe zugrunde, bei der maschinellen Herstellung von Lamellentaschen, besonders von Lamellentaschen an den Enden von Lamellen aus flexiblem Werkstoff, wie sie für Vertikaljalousien benutzt werden, höhere Genauigkeit beim Arbeitsergebnis, eine Steigerung der Durchsatzleistung sowie eine vereinfachte Vorrichtung zu erreichen.

Zur Lösung dieser Aufgabe ist gemäß der Erfindung ein Arbeitsverfahren nach dem Patentanspruch 1 und zur Durchführung eines solchen Arbeitsverfahrens eine Vorrichtung nach dem Patentanspruch 3 vorgesehen.

Durch die Erfindungsmerkmale werden lineare Bewegungen bei der Einführung des Schweißhilfsmittels in die teilweise geöffnete Lamellentasche und ebenfalls lineare Vorschubbewegungen für die Bemessung des für einen Schweißvorgang erforderlichen Abschnittes des Schweißhilfsmittels ermöglicht. Solche Bewegungen sind mit relativ einfachen Maschinenelementen sehr genau durchzuführen. Ein anderer Vorteil der Erfindungsmerkmale besteht darin, daß die Vorschubbewegung des Schweißhilfsmittels zur Bemessung des für den nächsten Schweißvorgang erforderlichen Abschnittes dieses Schweißhilfsmittels seitlich neben der Lamellenbahn und der Lamellentasche erfolgt, so daß diese Vorschubbewegung für das Schweißhilfsmittel und das Einlegen einer Lamellentasche in eine Taschenaufnahme der Vorrichtung zeitgleich erfolgen können, wodurch die Durchsatzleistung der Vorrichtung erhöht wird. Das Einlegen der Lamellentasche in die Taschenaufnahme der Vorrichtung wird nicht durch andere Maschinenteile verdeckt, so daß eine gute Überwachung der richtigen Position der Lamellentasche in der Taschenaufnahme gegeben ist.

Wesentliche Merkmale zur Ausgestaltung des Erfindungsgedankens enthalten die Ansprüche 2 und 4 bis 10.

In der Zeichnung ist ein Ausführungsbeispiel der Erfindung teils schematisch dargestellt. Es zeigen:
- Figur 1: einen Querschnitt einer Vorrichtung mit den Erfindungsmerkmalen und

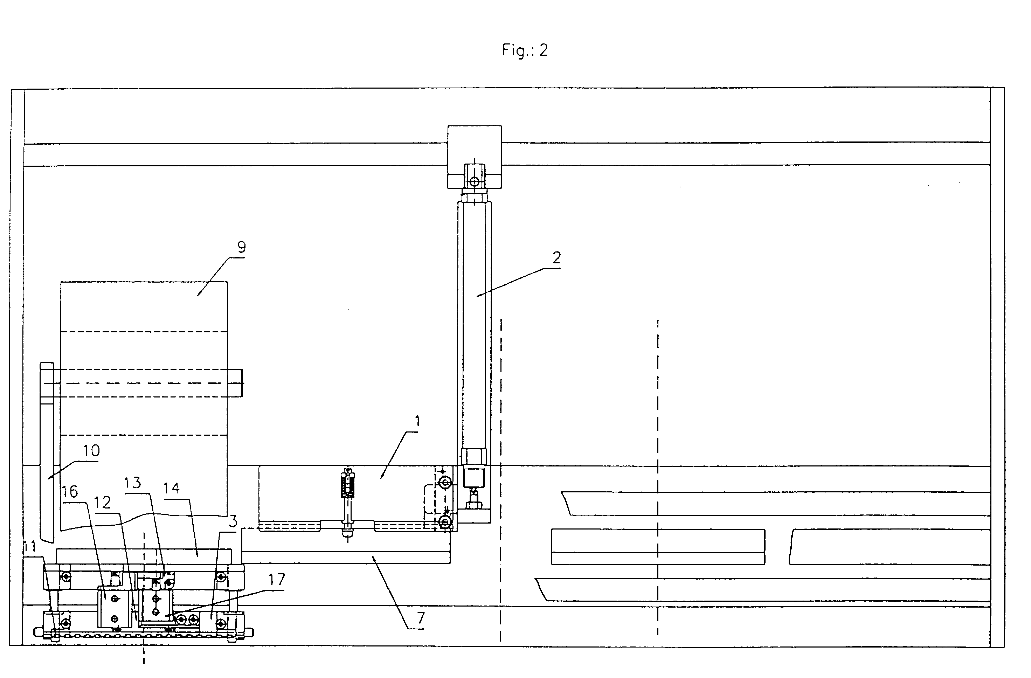

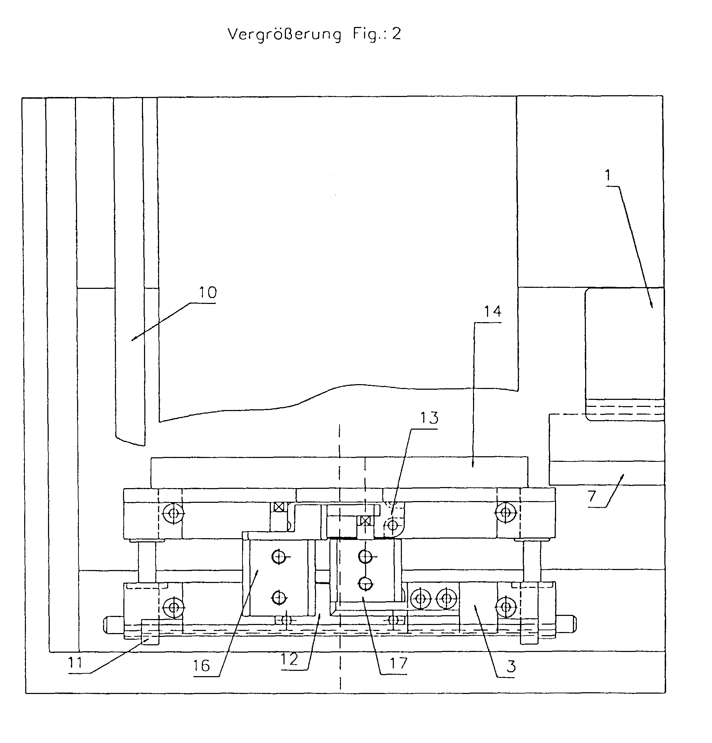

- Figur 2: eine teilweise Draufsicht auf die Vorrichtung nach Figur 1 in einem verkleinerten Maßstab, wobei verschiedene Maschinenelemente aus Gründen der besseren Übersicht weggelassen wurden.

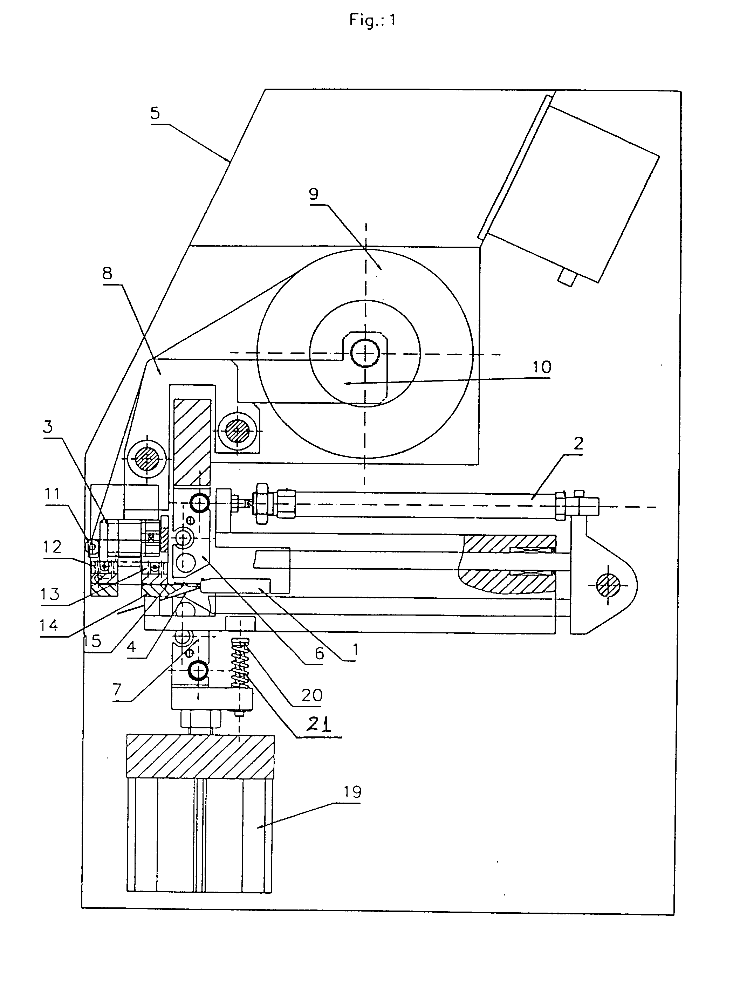

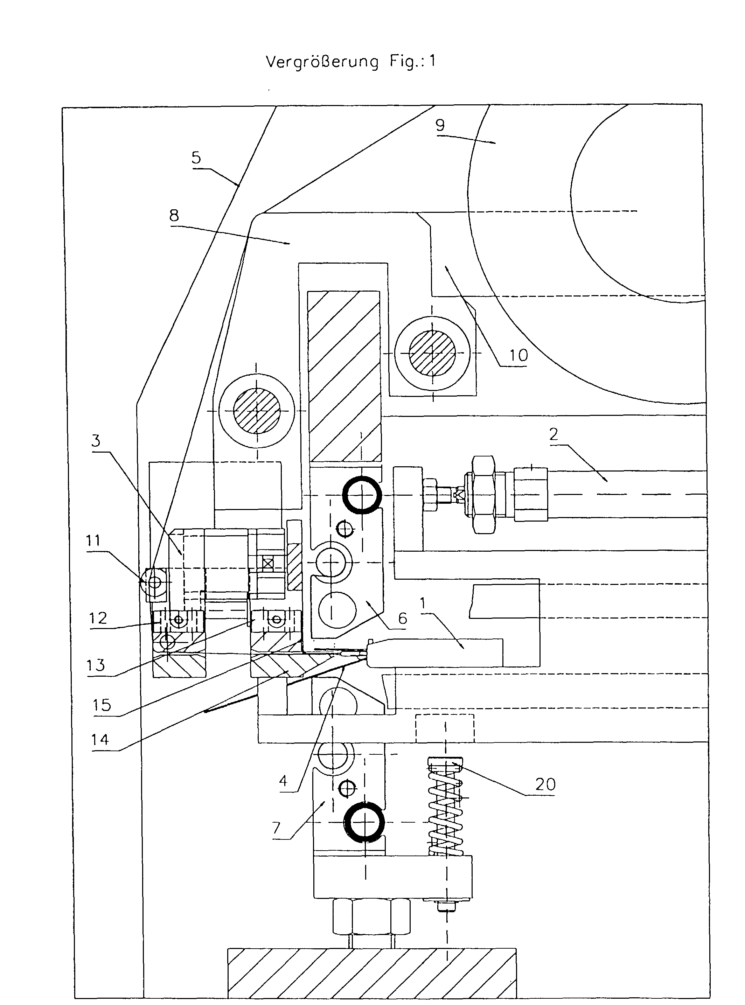

In einem Gestell 1 der Vorrichtung ist eine Taschenaufnahme 2 horizontal beweglich geführt und durch einen Pneumatikzylinder 3 antreibbar, so daß die Taschenaufnahme aus der in Figur 1 eingezeichneten Position an der Bedienungsseite der Maschine ein Stück aus der Maschine herausfahrbar und wieder zurückziehbar ist. Eine an einem Schlitten 9 angeordnete Vorschubeinheit 8 befindet sich dann seitlich neben der Taschenaufnahme 2. In diese Taschenaufnahme 2 wird die Lamelle 4 mit der teilweise geöffneten und meistens durch Rückfaltung gebildeten Lamellentasche 5 genau positioniert eingelegt. Zwei Abschnitte der Lamellenbahn bilden dann die offene Lamellentasche. Das Schweißhilfsmittel wird von einer Schweißhilfsmittelbahn 6 abgetrennt, die von einer Vorratsrolle 7 abläuft. Die Vorschubeinrichtung 8 für das bahnförmig zugeführte Schweißhilfsmittel 6 besteht in dem dargestellten Beispiel aus einer Umlenkung 12 für die Schweißhilfsmittelbahn 6, einer festen Membranklemme 13, einer beweglich geführten Membranklemme 14, Schutzleisten 15 und 16 sowie Pneumatikzylindern für den Antrieb und weitere Elementen. Der die Vorschubeinheit tragende Schlitten 9 ist auf einer Traverse 10 angeordnet und zusätzlich auf Führungen 11 des Gestells 1 quer zur Längsrichtung der Lamelle 4 beweglich geführt und zum Beispiel durch Pneumatikzylinder im Arbeitstakt der Vorrichtung antreibbar ist. Die Bahn 6 des Schweißhilfsmittels gelangt über eine Umlenkung 12 in eine fest am Schliten 9 angeordnete Membranklemme 13 und von dort in eine zweite Membranklemme 14, die gegenüber der Membranklemme 13 etwa in Höhe der Taschenaufnahme beweglich gegenüber dem Schlitten 9 angeordnet ist. Die durch Pneumatikzylinder bewirkte Wegstrecke der Bewegung der Membranklemme 14 und der Schutzleisten 15 und 16 gegenüber der festen Membranklemme 13 ergibt den Vorschub des für einen Schweißvorgang benötigten Abschnitts des Schweißhilfsmittels und für die Trennbewegung. Durch wechselweise Beaufschlagung der Membranklemmen 13 und 14, durch die die Bahn 6 des Schweißhilfsmittels abwechselnd eingeklemmt wird, erfolgt der Vorschub und für die Trennbewegung des für einen Schweißvorgang benötigten Abschnittes des Schweißhilfsmittels. Das vorgeschobene, freie Ende des Hilfsmittels wird durch Schutz leisten 15 und 16 geführt, die sich an der Vorschubeinrichtung 8 befinden. Zusammen mit dieser Führung durch die Schutzleisten 15 und 16 wird der für einen Schweißvorgang benötigte Abschnitt des Schweißhilfsmittels von der Seite her in die Schweißstation aus den beiden Schweißbacken 17 und 18 in die teilweise geöffnete Lamellentasche 5 eingeführt. Danach erfolgt eine horizontale Bewegung der geöffneten Membranklemme 14 und der Schutzleisten 15 und 16 in Längsrichtung der Lamelle 4, wodurch der vorgeschobene Abschnitt des Schweißhilfsmittels freigegeben wird, so daß nunmehr der Schweißvorgang erfolgt. Bei dem dargestellten Ausführungsbeispiel ist die untere Schweißbacke 18 nach oben gegen die feste Schweißbacke 17 durch einen Pneumatikzylinder 19 beweglich. Während der Hubbewegung der Schweißbacke 18 erfolgt durch einen mit der Schweißbacke verbundenen Stößel 20, der durch eine Schraubenfeder 21 abgefedert ist, gleichzeitig ein eventuell erforHöhenausgleich im Hinblick auf die Lage der Taschenaufnahme 2 und der Schutzleisten 15 und 16 der Vorschubeinheit 8. Sowohl die Taschenaufnaufnahme als auch die Vorschubeinheit können dazu in der Höhe begrenzt beweglich angeordnet sein.

## Patentansprüche

1. Arbeitsverfahren zur Herstellung von Taschen (5) an den Enden von Lamellen einer Lamellenbahn (4) aus einem flexiblen Werkstoff unter Verwendung des zwischen die miteinander zu verschweißenden Flächenabschnitte der Lamellenbahn (4) einzulegenden Schweißhilfsmittels (6) aus einem unter Einwirkung von Wärme und Druck plastisch verformbaren Kunststoff, welches bahnförmig von einer Vorratsrolle abschnittsweise zugeführt und nach der Durchführung des Schweißvorganges von der Materialbahn abgetrennt wird, **dadurch gekennzeichnet**, daß der abschnittweise Vorschub des Schweißhilfsmittels (6) seitlich neben der Lamellentasche (5) und anschließend das Einschieben des vorgeschobenen Endes des Schweißhilfsmittels (6) in die teilweise geöffnete Lamellentasche (5) aus den Abschnitten einer Lamellenbahn (4) von der Seite her durch eine Bewegung quer zur Längsrichtung der Lamellenbahn (4) erfolgt.

2. Arbeitsverfahren nach Anspruch 1, dadurch gekennzeichnet, daß das vorgeschobene Ende der Materialbahn des Schweißhilfsmittels beim Einschub in die teilweise geöffnete Lamellentasche (5) zwischen Schutzleisten (15,16) eingeschlossen erfolgt und die Schutzleisten anschließend etwa gradlinig aus dem zu verschweißenden Flächenabschnitt der Lamellenbahn zurückgezogen werden.

3. Vorrichtung zum Schweißen von Taschen an Lamellen aus flexiblem Werkstoff unter Verwendung eines Schweißhilfsmittels aus einem unter Einwirkung von Druck und Wärme plastisch verformbaren Kunststoff, bei der eine das Schweißhilfsmittel (6) zwischen zwei in eine Taschenaufnahme (2) eingelegten Abschnitten einer Lamellenbahn (4) im Bereich von gegeneinander beweglichen Schweißbacken schrittweise im Arbeitstakt der Schweißvorrichtung positionierende Vorschubeinrichtung (8) gleichzeitig in der benötigten Größe portioniert, **dadurch gekennzeichnet**, daß die Vorschubeinrichtung (8) quer zur Lamellenbahnlängsrichtung aus einer Position neben der Lamellenbahn (4) bis in eine Position in Überdeckung mit der Lamellenbahn (4) querverschiebbar angeordnet und Förderglieder (13,14) für das Schweißhilfsmittel (6) aufweist, die das Schweißhilfsmittel (16) um die Vorschublänge des für einen Arbeitstakt benötigten Schweißhilfsmittelabschnittes transportieren.

4. Vorrichtung nach Anspruch 3, dadurch gekennzeichnet, daß die Vorschubeinrichtung (8) für eine sich von einer Vorratsrolle (7) abwickelnde Schweißhilfsmittelbahn (6) auf wenigstens einer Traverse (10) am Gestell (1) quer zur Längsrichtung der Lamelle (4) verschiebbar angeordnet und auf Führungen (11) geführt ist.

5. Vorrichtung nach den Ansprüchen 3 und 4, dadurch gekennzeichnet, daß die Taschenaufnahme (2) in einem Gestell (1) in Längsrichtung der Lamelle (4) beweglich geführt und mit der Schweißzone der Lamellentasche (5) bis zwischen vertikal gegeneinander bewegliche Schweißbacken (17,18) verschiebbar ist.

6. Vorrichtung nach den Ansprüchen 3 bis 5, dadurch gekennzeichnet, daß die Förderglieder der Vorschubeinrichtung aus zwei abwechselnd aktivierbaren Membranklemmen (13,14) bestehen, von denen die eine (14) gegenüber der anderen (13) im Arbeitstakt der Schweißvorrichtung um die Vorschublänge des Schweißhilfsmittels (6) beweglich geführt ist.

7. Vorrichtung nach Anspruch 5, dadurch gekennzeichnet, daß die Klemmebene der beiden Membranklemmen (13,14) fluchtend mit der in die Taschenaufnahme (2) eingelegten Lamellentasche (5) angeordnet ist, und die den Schweißbacken (17,18) benachbarte Membranklemme (14) ein zwischen die geöffneten Schweißbacken schiebbares Auflager für das Ende der Bahn (6) des Schweißhilfsmittels aufweist.

8. Vorrichtung nach den Ansprüchen 3 bis 7, dadurch gekennzeichnet, daß das Auflager der den Schweißbacken (17,18) benachbarten Membranklemme (14) und eine mit einem geringen Abstand darüber angeordnete Schutzleiste (15) das Schweißhilfsmittel beim seitlichen Einschub in die Lamellentasche (5) zwischen sich aufnehmen und gemeinsam quer zur Längsrichtung der Lamellenbahn zurückziehbar sind.

9. Vorrichtung nach den Ansprüchen 3 bis 8, dadurch gekennzeichnet, daß die Taschenaufnahme (2) und die Vorschubeinheit (8) begrenzt höhenbeweglich angeordnet sind.

10. Vorrichtung nach den Ansprüchen 3 bis 9, dadurch gekennzeichnet, daß zum Antrieb der beweglichen Membranklemme (14) und der Taschenaufnahme (2) Pneumatikzylinder vorgesehen sind, die eine gemeinsame, im Arbeitstakt der Vorrichtung aufeinander abgestimmte Programmsteuerung aufweisen.

## Claims

1. Working method for making pockets (5) at the ends of lamellae of a lamella web (4) of a flexible material using the welding aid (6) which is to be inserted between the surface sections of the lamella web (4) to be welded together and which consists of a plastics material which can undergo plastic deformation under the effect of heat and pressure, is delivered by sections in web form from a supply roll and is separated from the material web after the welding operation has been carried out, characterised in that the feed by sections of the welding aid (6) takes place to the side of the lamella pocket (5), and the advanced end of the welding aid (6) is then inserted in the partly opened lamella pocket (5), consisting of the sections of a lamella web (4), from the side through a movement transversely to the longitudinal direction of the lamella web (4) .

2. Working method according to claim 1, characterised in that the advanced end of the material web of the welding aid becomes enclosed between protective strips (15, 16) upon insertion into the partly opened lamella pocket (5), and the protective strips are then retracted in an approximately straight line from the surface section of the lamella web to be welded.

3. Apparatus for welding pockets on lamellae of a flexible material using a welding aid consisting of a plastics material which can undergo plastic deformation under the effect of heat and pressure, in which a feed device (8), which, step-by-step in accordance with the working cycle of the welding apparatus, positions the welding aid (6) between two sections of a lamella web (4), which are inserted in a pocket holder (2), in the region of mutually mobile welding jaws, simultaneously apportions the required size, characterised in that the feed device (8) is displaceable transversely to the longitudinal direction of the lamella web, from a position next to the lamella web (4) into a position covering the lamella web (4), and has conveying members (13, 14) for the welding aid (6), which conveying members convey the welding aid (6) by the feed length of the welding aid section required for a working cycle.

4. Apparatus according to claim 3, characterised in that the feed device (8) for a welding aid web (6) winding off a supply roll (7) is disposed on at least one cross bar (l0) on the frame (1) such that it can be displaced transversely to the longitudinal direction of the lamella (4) and is guided on guides (11).

5. Apparatus according to claims 3 and 4, characterised in that the pocket holder (2) is guided in a frame (1) such that it can move in the longitudinal direction of the lamella (4) and can be displaced with the welding zone of the lamella pocket (5) into a position between welding jaws (17, 18) which can move vertically with respect to one another.

6. Apparatus according to claims 3 to 5, characterised in that the conveying members of the feed device consist of two membrane clamps (13, 14) which can be alternately activated and one (14) of which is guided such that it can move with respect to the other (13) by the feed length of the welding aid (6) in accordance with the working cycle of the welding apparatus.

7. Apparatus according to claim 5, characterised in that the clamping plane of the two membrane clamps (13, 14) is in alignment with the lamella pocket (5) inserted in the pocket holder (2), and the membrane clamp (14) adjacent to the welding jaws (17, 18) comprises a support which can be pushed between the opened welding jaws for the end of the web (6) of the welding aid.

8. Apparatus according to claims 3 to 7, characterised in that the support of the membrane clamp (14) adjacent to the welding jaws (17, 18) and a protective strip (15) disposed at a small spacing above hold the welding aid between them when it is inserted in the lamella pocket (5) from the side and can be retracted together transversely to the longitudinal direction of the lamella web.

9. Apparatus according to claims 3 to 8, characterised in that the pocket holder (2) and the feed unit (8) are disposed so that they can move vertically within limits.

10. Apparatus according to claims 3 to 9, characterised in that pneumatic cylinders are provided to drive the moving membrane clamp (14) and the pocket holder (2), the pneumatic cylinders exhibiting common program control coordinated with the working cycle of the apparatus.

## Revendications

1. Procédé de fabrication d'ourlets (5) aux extrémités de lamelles à partir d'une machine de fabrication de lamelles à partir de matériaux souples en utilisant différents moyens de soudure, de la surface de coupe de la machine de fabrication de lamelles (4) avec l'ajout d'un moyen de soudage (6) qui est thermodéformable sous l'action de la chaleur et de la pression, lequel est formé à partir d'un matériau en rouleau, la matière qui sera retirée de la chaîne, après application de coupe et exécution du procédé de soudage, caractérisé en ce que la coupe favorisée par le moyen de soudage (6) situé à coté de l'ourlet (5) de la lamelle et raccordé par l'insertion de l'avance de l'extrémité du moyen de soudage (6) dans cette partie ouverte de l'ourlet (5) de la lamelle sur le plan de coupe de la ligne de fabrication de lamelles s'effectue sous l'action d'un mouvement longitudinal de la chaîne de fabrication des lamelles (4).

2. Procédé selon la revendication 1, caractérisé en ce qu'avancé en bout de la chaîne de fabrication de lamelles du moyen de soudage par l'insertion dans cette partie partiellement ouverte de l'ourlet (5) sera retiré entre les bandes de protection (15,16) bloquées et les bandes de protections contigues suivant le degré de réglage dans le but de souder la surface de coupe de la ligne de fabrication de lamelles (5).

3. Dispositif de soudage d'ourlets de lamelles à partir d'un matériau souple en utilisant un moyen de soudage et sous l'action de la pression et de la chaleur d'une matière plastique déformable par un moyen de soudage (6) entre une poche de réception encastrée du matériau coupé de la chaîne de fabrication de lamelles (4) dans la zone de déplacement des deux mâchoires de soudage indexé graduellement dans le cycle de travail du dispositif de soudage, caractérisé en ce que la commande d'avancement (8) en direction longitudinale du dispositif de fabrication de lamelles (5) situé à coté de la chaîne de production centré jusqu'à la présentation en position de recouvrement de la chaîne de production (4) déplaçable transversalement et une chaîne de cheminement (13, 14) transportée par un moyen de soudage autour de la course pour une phase de travail nécessaire au moyen de soudage de la coupe.

4. Dispositif selon la revendication 3, caractérisé en ce que la commande d'avancement automatique (8) du rouleau de matière (7) déroulée du passage du moyen de soudage (6) à au moins une traverse (10) sur le support (1) centré transversalement à la direction longitudinale de la lamelle (4) mobile est guidée sur la glissière.

5. Dispositif selon les revendications 3 et 4, caractérisé en ce que la poche de réception (2) dans un support (1) est guidée en direction longitudinale de la lamelle (4) et avec la zone de soudage de l'ourlet (5) jusqu'entre les mâchoires de soudage verticales mobiles (17, 18).

6. Dispositif selon les revendications 3 à 5, caractérisé en ce que la chaîne de cheminement de la commande d'avancement à partir de deux changements est activée par la membrane de serrage de l'une (14) à l'autre (13) dans le cycle de travail du dispositif de soudage pendant le guidage de la course du moyen de soudage (6).

7. Dispositif selon la revendication 5, caractérisé en ce que le plan de serrage des deux membranes de serrage (13, 14) est aligné centré avec les ourlets (5) encastrés dans les poches de réception (2), les mâchoires de soudage (17, 18) à coté de la membrane de serrage (14) et entre les ouvertures mobiles des mâchoires de soudage, et présente un appui de l'extrémité de la chaîne (6) du moyen de soudage.

8. Dispositif selon les revendications 3 à 7, caractérisé en ce que le support des mâchoires de soudage (17, 18) centré adjacent à la membrane de serrage (14)sont à une petite distance au-delà de la bande de protection (15) située à coté du moyen de soudage introduit par le coté dans l'ourlet (5) sont rétractables en communs transversalement à la direction longitudinale de la chaîne de production de lamelles.

9. Dispositif selon les revendications 3 à 8, caractérisé en ce que les poches de réception (2) et la commande d'avancement (8) sont centrées délimitées par un mouvement vertical.

10. Dispositif selon les revendications 3 à 9, caractérisé en ce que pour le mouvement de la membrane mobile (14) et du vérin pneumatique des poches de réception (2) sont prévues pour travailler ensemble dans le même cycle du dispositif qui les ajuste l'un à l'autre par une commande programmée.
